# EUROPEAN PATENT APPLICATION

(11) **EP 2 902 959 A1**
(43) Date of publication of application: **05.08.2015**
(21) Application number: 12885252.2
(22) Date of filing: 28.09.2012
(51) Int. Cl.: G06Q 50/30

(54) **TICKET VENDING SYSTEM AND TICKET VENDING METHOD**

(71) Applicant: Glory Ltd., Hyogo-ken 670-8567 (JP)
(72) Inventor: YOKOTANI Masatsugu, Himeji-shi Hyogo 670-8567 (JP); DOI Kazuhiro, Himeji-shi Hyogo 670-8567 (JP); NAKAGAWA Keiju, Himeji-shi Hyogo 670-8567 (JP)
(74) Representative: Schwabe - Sandmair - Marx
(86) International application number: PCT/JP2012/075199
(87) International publication number: WO 2014/049859

(57) **Abstract**

A ticket vending system includes: a plurality of reception terminal apparatuses 20 configured to be operated by a staff of a ticket distributor, and configured to receive a purchase request of a ticket; at least one settlement apparatus 50 located on a position different from those of the reception terminal apparatuses 20, to which a customer makes a payment for the ticket which purchase request has been received by the reception terminal apparatus 20; and a ticket issuance apparatus 30 configured to issue the ticket which payment has been completed at the settlement apparatus. The ticket vending system further includes a transaction identification unit configured to identify information related to a transaction which purchase request has been received by the reception terminal apparatus 20, and configured to enable the settlement apparatus 50 to perform a settlement process of the transaction.

## Description

### TECHNICAL FIELD

The present invention relates to a ticket vending system and a ticket vending method for vending a ticket in a train station or the like.

### BACKGROUND ART

In an European station or the like where a train connection is difficult, a train ticket or the like has conventionally been sold by a staff in a ticket office. In the conventional manner, when a customer makes a request for purchasing a ticket to the staff, the staff inputs information related to the ticket to be purchased to a reception terminal apparatus. Then, the staff calculates a change amount of money by deducting a ticket price from a deposit amount of money handed from the customer. Thereafter, the staff takes the change out of a drawer, and delivers it by hand to the customer together with the ticket issued by a ticket issuance apparatus.

With respect to this operation, it can be considered to introduce, in place of the drawer, a settlement apparatus that can automatically settle up. However, in a station or the like where there are a large number of guests, there are a plurality of staffs in a ticket office. Thus, if such a settlement apparatus is provided for each staff, a large introduction cost is needed.

Alternatively, it can be considered that only one settlement apparatus is disposed in a ticket office, and each staff of a ticket distributor brings a deposit amount of money handed from a customer to the settlement apparatus so as to settle up. However, in this manner, for each transaction, the staff has to bring a deposit amount of money from a customer to the settlement apparatus, which increases a burden of the ticket distributor such as a railroad company. In addition, in this manner, when it takes a lot of time for a settlement process to be finished because the settlement apparatus is busy, a customer has to wait for a long time near the ticket office.

### DISCLOSURE OF THE INVENTION

In view of the above circumstances, the present invention provides a ticket vending system by which an automatic settlement process can be performed by only a few settlement apparatuses, whereby there is no increase in burden on a ticket distributor, while it is not necessary for a customer to wait for a long time near a ticket office.

The ticket vending system according to the present invention includes: a plurality of reception terminal apparatuses configured to be operated by a staff of a ticket distributor, and configured to receive a purchase request of a ticket; at least one settlement apparatus located on a position different from those of the reception terminal apparatuses, to which a customer makes a payment for the ticket which purchase request has been received by the reception terminal apparatus; a ticket issuance apparatus configured to issue the ticket which payment has been completed at the settlement apparatus; and a transaction identification unit configured to identify information related to a transaction which purchase request has been received by the reception terminal apparatus, and configured to enable the settlement apparatus to perform a settlement process.

In the ticket vending system according to the present invention, the transaction identification unit may include: a medium issuance apparatus disposed on each reception terminal apparatus, configured to issue a medium in which specific information associated with the transaction is recorded; a management apparatus communicatively connected to the reception terminal apparatuses and the settlement apparatus, configured to store the specific information associated with the transaction; and a medium reading apparatus disposed on the settlement apparatus, configured to read the specific information recorded in the medium; and wherein the transaction identification unit identifies the transaction associated with the specific information, from the specific information read out by the medium reading apparatus.

In the ticket vending system according to the present invention, the transaction identification unit may include: a first biometric-information acquiring apparatus configured to acquire biometric information of a customer who makes a purchase request to the reception terminal apparatus; and a second biometric-information acquiring apparatus configured to acquire biometric information of a customer who makes a payment to the settlement apparatus; and wherein the transaction identification unit compares the biometric information acquired by the second biometric-information acquiring apparatus with the biometric information acquired by the first biometric-information acquiring apparatus, so as to identify the transaction.

The ticket vending system according to the present invention may further include a management apparatus communicatively connected to the reception terminal apparatuses and the settlement apparatus, configured to store the biometric information acquired by the first biometric-information acquiring apparatus in association with the transaction, wherein the transaction identification unit reads out the biometric information acquired by the first biometric-information acquiring apparatus conforming to the biometric information acquired by the second biometric-information acquiring apparatus, so as to identify the transaction associated with the biometric information.

In the ticket vending system according to the present invention, the transaction identification unit may include: a first article-information accruing apparatus configured to acquire intrinsic information of an article possessed by a customer who makes a purchase request to the reception terminal apparatus; and a second article-information acquiring apparatus configured to acquire intrinsic information of an article possessed by a customer who makes a payment to the settlement apparatus; and wherein the transaction identification unit compares the intrinsic information of the article acquired by the second article-information acquiring apparatus with the intrinsic information of the article acquired by the first article-information acquiring apparatus, so as to identify the transaction.

The ticket vending system according to the present invention may further comprise a management apparatus communicatively connected to the reception terminal apparatuses and the settlement apparatus, and configured to store the intrinsic information of the article acquired by the first article-information acquiring apparatus in association with the transaction, wherein the transaction identification unit reads out the intrinsic information of the article acquired by the first article-information acquiring apparatus, the intrinsic information of the article conforming to the intrinsic information of the article acquired by the second article-information acquiring apparatus, so as to identify the transaction associated with the intrinsic information of the article.

In the ticket vending system according to the present invention, the ticket issuance apparatus may be located adjacently to the settlement apparatus or integrally with the settlement apparatus.

In the ticket vending system according to the present invention, the settlement apparatus may have a collective settlement function to collectively settle up a total amount of payments of a plurality of transactions.

In the ticket vending system according to the present invention, when there are a plurality of tickets of the same price, the settlement apparatus may be capable of designating a settlement splitting mode, and when the settlement splitting mode is designated, the tickets of the same price may be separately settled.

In the ticket vending system according to the present invention, a plurality of the settlement apparatuses may be provided, and the ticket vending system may further include an notification unit configured to notify the customer of a settlement apparatus that should be used and/or another settlement apparatus that should not be used, based on information of an amount of cash in each settlement apparatus or a status of each settlement apparatus.

In the ticket vending system according to the present invention, a plurality of the settlement apparatuses may be provided, and the ticket vending system may further include: a queueing-condition acquiring unit configured to acquire information related to a queueing-condition of each settlement apparatus; and an notification unit configured to notify the customer of a settlement apparatus that should be used and/or another settlement apparatus that should not be used, based on the information acquired by the queueing-condition acquiring unit.

The ticket vending system according to the present invention may further include an automatic reception apparatus configured to issue to the customer a medium in which a reception number is recorded, wherein each of the reception terminal apparatuses has a reception display unit configured to display the reception number, wherein the transaction identification unit includes: a management apparatus communicatively connected to the reception terminal apparatuses and the settlement apparatus, configured to store the reception number in association with the transaction; and a medium reading apparatus disposed on the settlement apparatus, configured to read the reception number recorded in the medium; and wherein the transaction identification unit identifies the transaction associated with the reception number, from the reception number read by the medium reading apparatus.

In the ticket vending system according to the present invention, the transaction identification unit may include: a medium issuance apparatus disposed on each reception terminal apparatus, configured to issue a medium in which contents of the transaction are recorded; and a medium reading apparatus disposed on the settlement apparatus, configured to read the contents of the transaction recorded in the medium; and wherein the transaction identification unit performs a settlement process using the settlement apparatus, based on the contents of the transaction read by the medium reading apparatus.

A ticket vending method according to the present invention includes: receiving a purchase request of a ticket by a staff of a ticket distributor who operates one of a plurality of reception terminal apparatuses; identifying, by a transaction identification unit, information related to a transaction which purchase request having been received by the reception terminal apparatus; making a payment for the ticket which purchase request has been received by the reception terminal apparatus, by a customer who operates a settlement apparatus located on a position different from that of the reception terminal apparatus, with the use of the information related to the transaction identified by the transaction identification unit; and issuing, by a ticket issuance apparatus, the ticket which payment has been completed at the settlement apparatus.

According to the present invention, there are provided the plurality of reception terminal apparatuses configured to be operated by one or more staffs of a ticket distributor. In addition, at a position different from those of the reception terminal apparatuses, there is located the settlement apparatus to which the customer makes a payment for the ticket which purchase request has been received by the reception terminal apparatus. Moreover, the information related to the transaction which purchase request has been received by the reception terminal apparatus is identified by the transaction identification unit, and the settlement process of the transaction can be performed at the settlement apparatus. Thus, according to the present invention, an automatic settlement process can be performed by only a few settlement apparatuses. In addition, there is no increase in burden on the ticket distributor, and it is not necessary for the customer to wait for a long time near the ticket office.

### BRIEF DESCRIPTION OF THE DRAWINGS

Fig. 1 is an upper plan view showing a layout of a ticket store of a station or the like, in which a ticket vending system according to a first embodiment of the present invention is used;
Fig. 2 is a schematic front view of a settlement apparatus used in the first embodiment of the present invention;
Fig. 3 is a schematic structural view schematically showing the ticket vending system according to the first embodiment of the present invention;
Fig. 4 is a schematic lateral sectional view schematically showing, in a lateral section, an inside structure of a coin settlement apparatus used in the first embodiment of the present invention;
Fig. 5 is a schematic front sectional view showing, in a front section, an inside structure of the coin settlement apparatus used in the first embodiment of the present invention;
Fig. 6 is a schematic lateral sectional view schematically showing, in a lateral section, an inside structure of a banknote settlement apparatus used in the first embodiment of the present invention;
Fig. 7 is a block diagram of the ticket vending system according to the first embodiment of the present invention;
Fig. 8 is an upper plan view showing a layout of a ticket store of a station or the like, in which a ticket vending system according to a second embodiment of the present invention is used;
Fig. 9 is a schematic front view of a settlement apparatus used in the second embodiment of the present invention;
Fig. 10 is a schematic structural view schematically showing the ticket vending system according to the second embodiment of the present invention;
Fig. 11 is an upper plan view showing a layout of a ticket store of a station or the like, in which a ticket vending system according to a third embodiment of the present invention is used;
Fig. 12 is a schematic front view of a settlement apparatus used in the third embodiment of the present invention;
Fig. 13 is a schematic structural view schematically showing the ticket vending system according to the third embodiment of the present invention;
Fig. 14 is an upper plan view showing a layout of a ticket store of a station or the like, in which a ticket vending system according to a fourth embodiment of the present invention is used;
Fig. 15 is a schematic structural view schematically showing the ticket vending system according to the fourth embodiment of the present invention;
Fig. 16 is an upper plan view showing a layout of a ticket store of a station or the like, in which a ticket vending system according to a fifth embodiment of the present invention is used;
Fig. 17 is a schematic front view of a settlement apparatus used in the fifth embodiment of the present invention;
Fig. 18 is a schematic structural view schematically showing the ticket vending system according to the fifth embodiment of the present invention;
Fig. 19 is an upper plan view showing a layout of a ticket store of a station or the like, in which a ticket vending system according to a sixth embodiment of the present invention is used; and
Fig. 20 is a schematic structural view schematically showing the ticket vending system according to the sixth embodiment of the present invention.

### EMBODIMENTS FOR CARRYING OUT THE INVENTION

### First Embodiment

### <<Structure>>

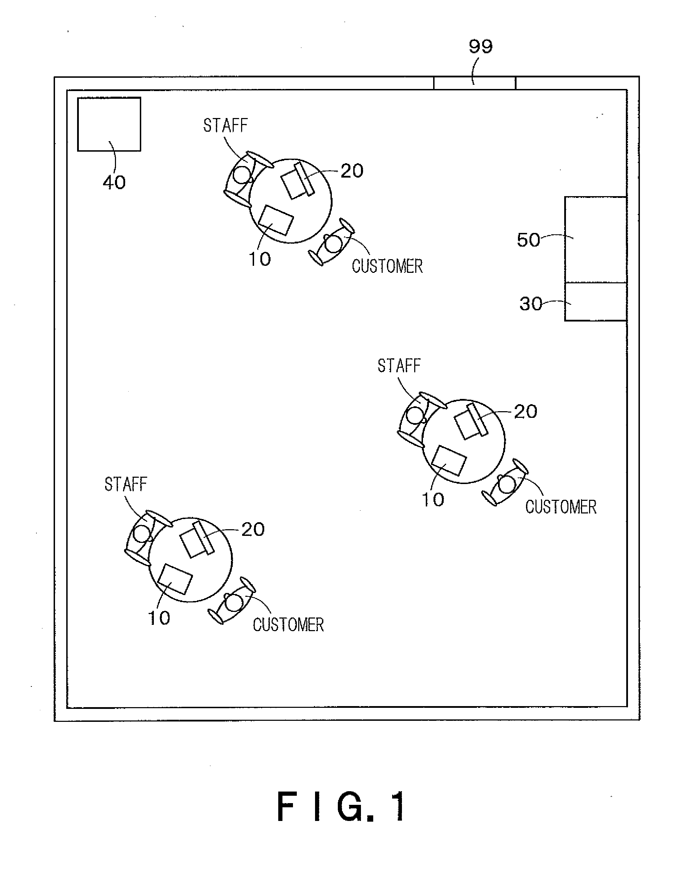

A first embodiment of the ticket vending system according to the present invention is explained herebelow with reference to the drawings. Figs. 1 to 7 are views for explaining the first embodiment of the present invention.

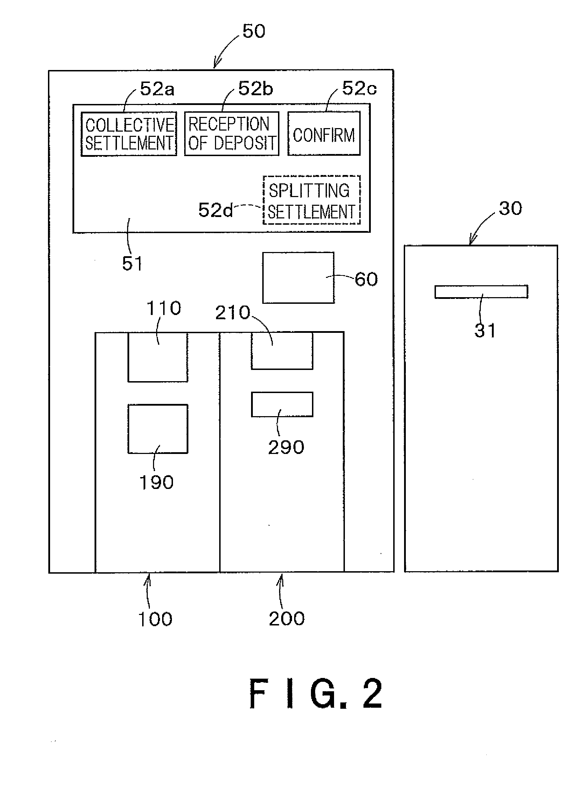

As shown in Fig. 1, the ticket vending system in this embodiment includes: a plurality of (three in this embodiment) reception terminal apparatuses 20, each which is configured to be operated by a staff (e.g., station staff) of a ticket distributor such as a railroad company or the like, and is configured to receive a purchase request of a ticket such as a train ticket; a settlement apparatus 50 located on a position different from those of the reception terminal apparatuses 20, to which a customer makes a payment for the ticket which purchase request has been received by the reception terminal apparatus 20; and a ticket issuance apparatus 30 configured to issue, from a ticket issuance opening 31 (see Fig. 2), the ticket which payment has been completed at the settlement apparatus 50. In this embodiment, as shown in Fig. 1, the reception terminal apparatuses 20, the settlement apparatus 50 and the ticket issuance apparatus 30 are installed in the same room. However, not limited thereto, the reception terminal apparatuses 20 may be installed in a room different from another room where the settlement apparatus 50 and the ticket issuance apparatus 30 are installed. The reference number "99" in Fig. 1 depicts a gateway of the room.

This embodiment employs a so-called island type, in which each staff is allocated to an inquiry desk like an island to promote face-to-face sales. In this embodiment, only an example employing the island type is explained. However, in order to promote faster sales, a counter may be provided, and staffs are also allocated to this counter in addition to the inquiry desks.

As shown in Fig. 2, the settlement apparatus 50 in this embodiment includes: money settlement apparatuses 100, 200 configured to dispense money whose amount corresponds to a difference between an amount of deposit money and an amount of ticket sales; an operation display unit 51 of a touch panel type, capable of displaying predetermined information and receiving an operation input; and a medium reading apparatus 60 which will be described below. The money settlement apparatuses 100, 200 respectively include a coin settlement apparatus 100 configured to perform a settlement process regarding one or more coins, and a banknote settlement apparatus 200 configured to perform a settlement process regarding one or more banknotes. The operation display unit 51 displays various buttons to be touched, through which a customer can input various information, the buttons being, for example, a below-described collective settlement button 52a, a below-described settlement splitting button 52d, a deposit reception button 52d for allowing a deposit process of escrowed money, a confirmation button 52c for confirming that identification of a transaction to be collectively settled has been finished, etc.

In addition, the ticket vending system in this embodiment further includes a transaction identification unit configured to identify information related to a transaction which purchase request has been received by the reception terminal apparatus 20, and to enable the settlement apparatus 50 to perform a settlement process of the transaction.

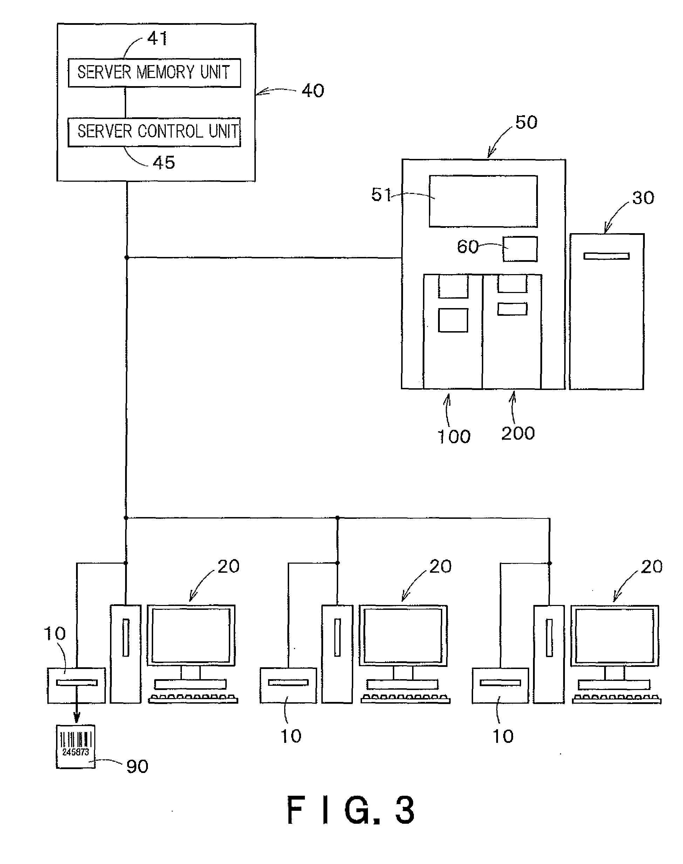

As shown in Fig. 3, the transaction identification unit in this embodiment includes: a medium issuance apparatus 10 disposed on each reception terminal apparatus 20, configured to issue a medium 90 recording specific information such as a specific number or the like that is associated with a transaction; a server (management apparatus) 40 connected for communication with the reception terminal apparatuses 20 and the settlement apparatus 50, configured to store the specific information associated with the transaction; and the medium reading apparatus 60 disposed on the settlement apparatus 50, configured to read the specific information recorded in the medium 90. As shown in Fig. 3, a specific number and a barcode showing the specific number are printed on the medium 90 in this embodiment.

In addition, the server 40 includes a server control unit 45 configured to control the server 40. The server control unit 45 reads out specific information (more specifically, specific number) stored in the server memory unit 41, which conforms to specific information (more specifically, specific number) read by the medium reading apparatus 60, so as to identify the transaction associated with the specific information (specific number). As a result, the transaction which purchase reservation was performed by a customer can be settled by the settlement apparatus 50.

### <Coin Settlement Apparatus 100>

Any apparatus can be used as the coin settlement apparatus 100 in this embodiment, as long as the apparatus can perform a settlement process regarding one or more coins. Herebelow, a structure of the coin settlement apparatus 100 in this embodiment is briefly explained by way of example.

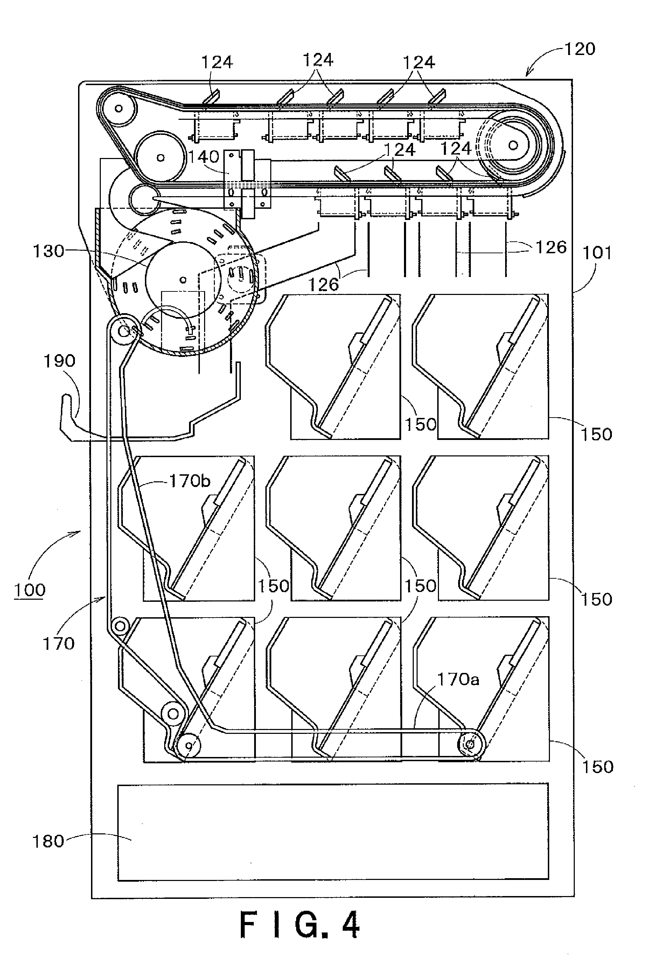

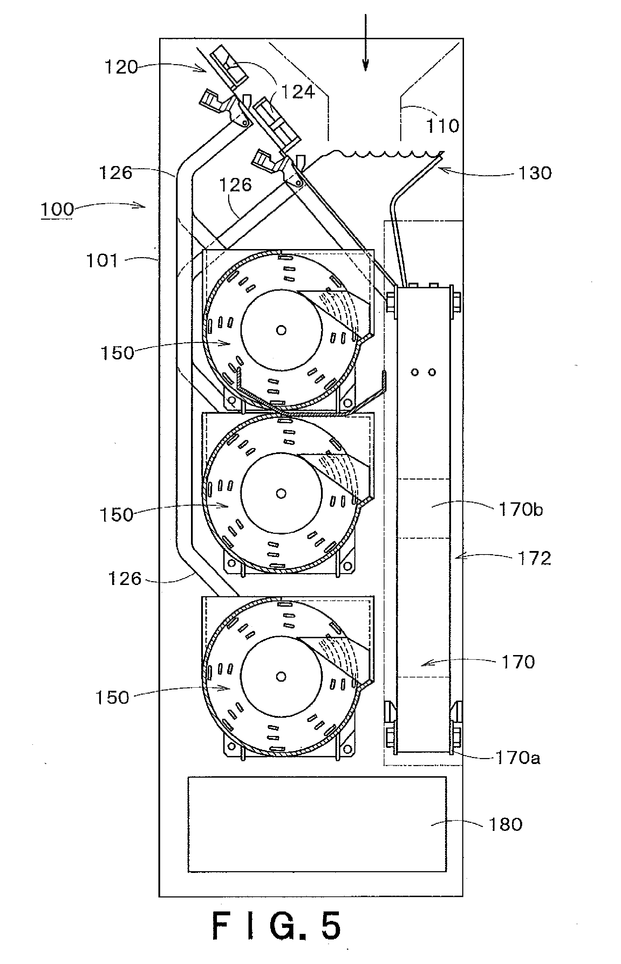

As shown in Fig. 4, the coin settlement apparatus 100 includes: a substantially cuboid coin housing 101; a coin inlet unit 110 provided on the coin housing 101 for inputting coins (see Fig. 5); and a coin escrow unit 130 configured to reserve coins transported from the coin inlet unit 110 and feed out the reserved coins one by one. In addition, in the coin housing 101, there is a deposit-coin transport unit 120 configured to transport the coins fed out by the escrow unit 130. A coin recognition unit 140 is disposed on the deposit-coin transport unit 120, the recognition unit 140 configured to recognize each coin transported by the deposit-coin transport unit 120 and to count the coins for each denomination. The coin recognition unit 140 is configured to recognize denomination, authenticity, fitness and so on for each coin, and count the coins for each denomination. The coin inlet unit 110 is located at an upper portion of the coin housing 101. The coins inputted from the coin inlet unit 110 are transported to the escrow unit 130 by their own weight, and temporarily reserved in the escrow unit 130 (see Fig. 5).

In addition, a plurality of (eight, in the present embodiment) coin storing units 150 is provided below the deposit-coin transport unit 120 in the coin housing 101. Based on the recognition result of each coin by the coin recognition unit 140, the coins transported from the deposit-coin transport unit 120 are sorted by coin sorting units 124 provided on the deposit-coin transport unit 120, and stored in the respective coin storing units 150. In addition, each coin storing unit 150 is configured to feed out the coins stored therein, one by one, when needed.

In addition, the coin settlement apparatus 100 includes a coin dispensing unit 190 configured to dispense one or more coins outside the coin housing 101. There is provided a dispensing-coin transport unit 170 configured to transport the coins fed out from the respective coin storing units 150 to the coin dispensing unit 190. There is also provided a coin collection box 180 below the dispensing-coin transport unit 170 in the coin housing 101. Furthermore, there is provided a detection sensor (not shown) configured to detect as to whether the coins are taken out or not, at the coin dispensing unit 190.

In the present embodiment, nine coin sorting units 124 are provided on the deposit-coin transport unit 120. One coin sorting unit 124 among them is configured to function as a reject coin sorting unit. When a coin is judged as a reject coin based on the recognition result by the coin recognition unit 140, the coin is sorted by the reject coin sorting unit, and transported to the coin dispensing unit 190. Each coin sorting unit 124 is provided with a corresponding chute 126. The coin sorted by each coin sorting unit 124 is transported to the coin dispensing unit 190 or the corresponding coin storing unit 150, through the corresponding chute 126 provided at the coin sorting unit 124.

The dispensing-coin transport unit 170 of the present embodiment includes a first dispensing-coin transport part 170a extending in a substantially horizontal direction below the respective coin storing units 150 and a second dispensing-coin transport part 170b for transporting one or more coins transported from the first dispensing-coin transport part 170a to the coin dispensing unit 190.

The dispensing-coin transport unit 170 has an endless belt provided with a plurality of projection members (not shown). One or more coins are picked up by one projection member, so that the one or more coins are transported. In addition, as shown in Fig. 5, a coin dispensing space 172 is formed on one lateral side (right side in Fig. 5) of each coin storing unit 150. In the coin dispensing space 172, each coin fed out from the coin storing units 150 falls down on the endless belt at the first dispensing-coin transport part 170a of the dispensing-coin transport unit 170. The above described chute 126 is provided on the other lateral side (left side in Fig. 5) of each coin storing unit 150.

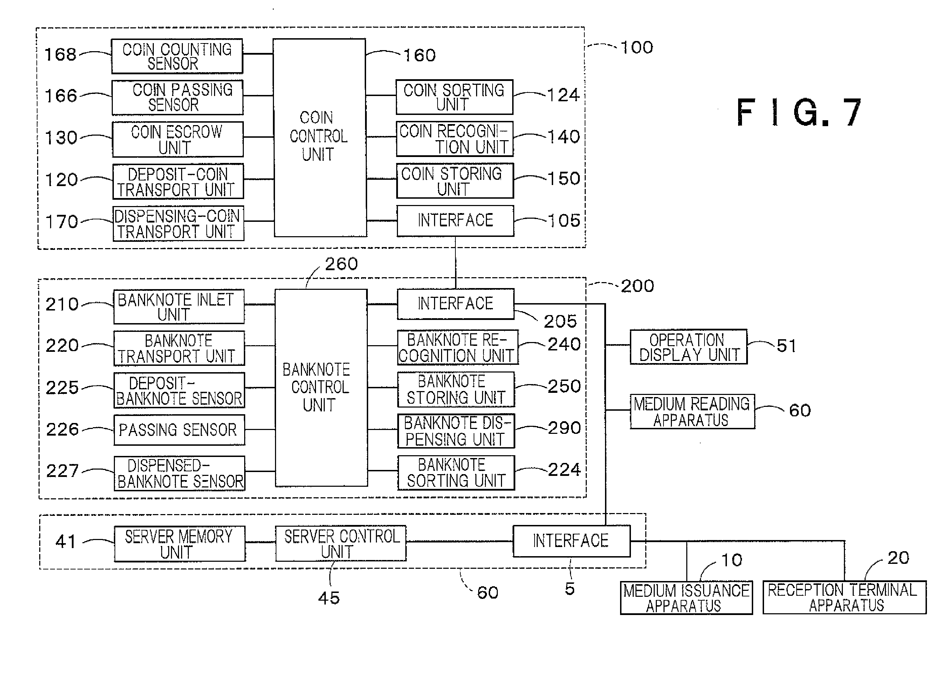

A coin passing sensor 166 and a pair of coin counting sensors 168 are provided at a coin outlet opening at each coin storing unit 150 (see Fig. 7). The coin passing sensor 166 is configured to detect that a coin transported to the coin outlet opening of the coin storing unit 150 passes through the coin passing sensor 166. The pair of coin counting sensors 168 is configured to count coins fed out from the coin outlet opening of the coin storing unit 150.

When the endless belt is circulated in an anticlockwise direction in Fig. 4, a coin fed out from each coin storing unit 150 passes through the coin dispensing space 172 by its own weight, and falls down on the endless belt at the first dispensing-coin transport part 170a. Subsequently, the coin on the endless belt is transported from the first dispensing-coin transport part 170a to the second dispensing-coin transport part 170b. Then, the coin picked up by the projection member of the endless belt at the second dispensing-coin transport part 170b is transported upward in Fig. 4, finally to the coin dispensing unit 190 through an upper end portion of the second dispensing-coin transport part 170b.

On the other hand, when the endless belt is circulated in a clockwise direction in Fig. 4, a coin fed out from each coin storing unit 150 passes through the coin dispensing space 172 by its own weight, and falls down on the endless belt at the first dispensing-coin transport part 170a. However, subsequently, the coin on the endless belt is transported from the first dispensing-coin transport part 170a to the coin collection box 180, and finally stored in the coin collection box 180.

The coin collection box 180 is provided in a removable manner with respect to the coin housing 101. After the coins are stored in the coin collection box 180, the operator can remove the coin collection box 180 from the coin housing 101, so that the operator can collect the coins together with the coin collection box 180.

In addition, as shown in Fig. 7, the coin settlement apparatus 100 has a coin control unit 160 configured to control the coin settlement apparatus 100. The coin control unit 160 is connected to the above described components, i.e., the coin passing sensor 166, the pair of coin counting sensors 168, the coin escrow unit 130, the deposit-coin transport unit 120, the coin recognition unit 140, the coin sorting units 124, the coin storing units 150, the dispensing-coin transport unit 170, and so on. The coin control unit 160 is configured to send information or instruction commands to these components, and/or receive information or instruction commands from these components.

### <Banknote Settlement Apparatus 200>

Any apparatus can be used as the banknote settlement apparatus 200 in this embodiment, as long as the apparatus can perform a settlement process regarding one or more banknotes. Herebelow, a structure of the banknote settlement apparatus 200 in this embodiment is briefly explained by way of example.

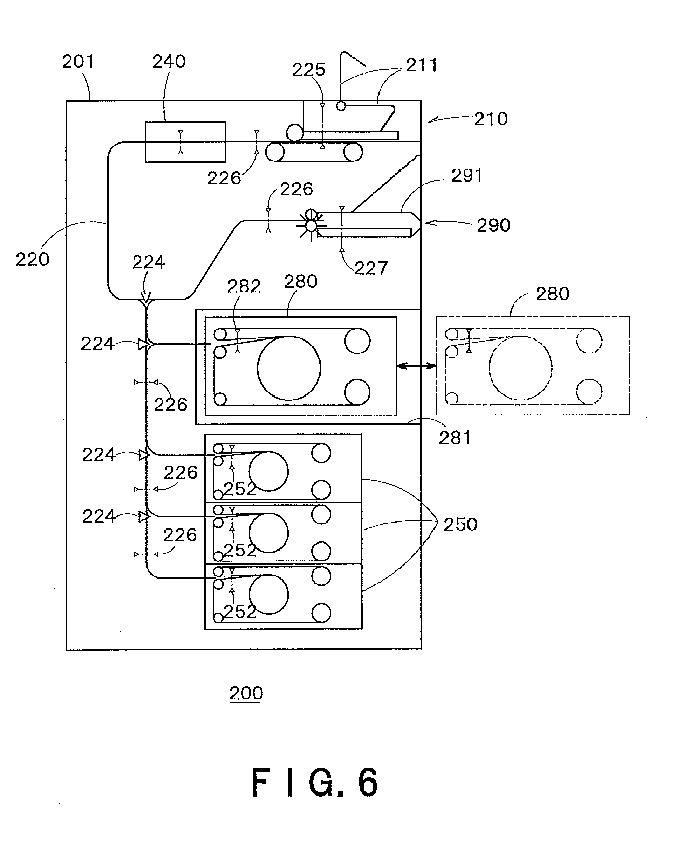

As shown in Fig. 6, the banknote settlement apparatus 200 includes: a substantially cuboid banknote housing 201; a banknote inlet unit 210 provided on the banknote housing 101 for inputting banknotes; a banknote transport unit 220 configured to transport banknotes deposited from the banknote inlet unit 210 one by one; a banknote recognition unit 240 configured to recognize denomination, authenticity, fitness and so on for each banknote transported by the banknote transport unit 220, and to count the banknotes for each denomination; a plurality of (three, in the present embodiment) banknote storing units 250 configured to store the banknotes based on the recognition result of each banknote by the banknote recognition unit 240. Each banknote storing unit 250 is configured to feed out the banknotes stored therein, one by one, when needed.

In addition, the banknote settlement apparatus 200 includes a banknote dispensing unit 290 configured to dispense one or more banknotes fed out from the banknote storing units 250 to the banknote transport unit 220. Not only the banknotes fed out from the banknote storing units 250 but also a reject banknote, which is rejected by a reason such that the banknote could not be recognized by the banknote recognition unit 240, is transported to the banknote dispensing unit 290. In addition, banknote sorting units 224 are provided on the banknote transport unit 220, each banknote sorting unit configured to suitably sort the transported banknotes based on the recognition result of each banknote by the banknote recognition unit 240. A plurality of passing sensors 226 each configured to detect that a banknote passes through the passing sensor 226 is provided at the banknote transport unit 220. In addition, there is provided a banknote-storing-unit sensor 252 configured to detect as to whether the banknotes are put in or taken out, at the banknote storing unit 250.

In addition, a banknote-collection-cassette mounting unit 281, which is open on a front side thereof, is provided on the banknote housing 201. A banknote collection cassette can be mounted on the banknote-collection-cassette mounting unit 281 in a removable manner. The banknote transport unit 220 extends up to the banknote-collection-cassette mounting unit 281, so that the banknote transport unit 220 can transport the banknotes to the banknote collection cassette 280. There is provided a banknote-collection-cassette sensor 282 configured to detect as to whether the banknotes are put into or taken out from the banknote collection cassette 280, at the banknote collection cassette 280.

A deposit-banknote sensor 225 is provided at the banknote inlet unit 210 for detecting as to whether the one or more banknotes are left at the banknote inlet unit 210. A dispensed-banknote sensor 227 is provided at the banknote dispensing unit 290 for detecting as to whether the one or more banknotes are left at the banknote dispensing unit 290.

The banknote inlet unit 210 includes a banknote-inlet-unit cover 211 for covering the banknote inlet unit 210. The banknote dispensing unit 290 includes a banknote-dispensing-unit cover 291 for covering the banknote dispensing unit 290.

In addition, as shown in Fig. 7, the banknote settlement apparatus 200 has a banknote control unit 260 configured to control the banknote settlement apparatus 200. The banknote control unit 260 is connected to the above described components, i.e., the banknote inlet unit 210, the banknote transport unit 220, the banknote sorting units 224, the deposit-banknote sensor 225, the passing sensor 226, the dispensed-banknote sensor 227, the banknote recognition unit 240, the banknote storing units 250, the banknote dispensing unit 290, and so on. The banknote control unit 260 is configured to send information or instruction commands to these components, and/or receive information or instruction commands from these components. In addition, although it is not shown, the banknote control unit 260 is connected to the banknote-storing-unit sensor 252 and the banknote-collection-cassette sensor 282, so that the banknote control unit 260 is also configured to receive information from the banknote-storing-unit sensor 252 and the banknote-collection-cassette sensor 282.

The banknote control unit 260 is communicatively connected to the coin control unit 160 via interfaces 205, 105. The banknote control unit 260 is communicatively connected to the server control unit 45 via interfaces 205, 5. The banknote control unit 260 is communicatively connected to the operation display unit 51 via the interface 205. The server control unit 45 is communicatively connected to the medium reading apparatus 60, the reception terminal apparatus 20 and the medium issuance apparatus 10, via the interface 5. The banknote control unit 260, the coin control unit 160, the server control unit 45, the operation display unit 51, the medium reading apparatus 60, the reception terminal apparatuses 20 and the medium issuance apparatus 10 can transmit to and receive from information and/or operation commands one another. Although the operation display unit 51, the medium reading apparatus 60, the reception terminal apparatuses 20 and the medium issuance apparatus 10 also have interfaces, the interfaces are not shown.

As shown in Fig. 2, in this embodiment, a ticket issuance apparatus 30 is located adjacently to the settlement apparatus 50. In place of the structure in which the ticket issuance apparatus 30 is located adjacently to the settlement apparatus 50, the ticket issuance apparatus 30 may be located integrally with the settlement apparatus 50. It is not necessary that the ticket issuance apparatus 30 is located adjacently to the settlement apparatus 50 or that the ticket issuance apparatus 30 is located integrally with the settlement apparatus 50. The ticket issuance apparatus 30 and the settlement apparatus 50 may be located in different positions.

The settlement apparatus 50 in this embodiment has a collective settlement function to collectively settle up a total amount of payments of a plurality of transactions. When the use of the collective settlement function is designated, the settlement apparatus 50 can collectively settle up a total amount of payments of a plurality of transactions. When the collective settlement function is desired to be used, the collective settlement button 52a (see Fig. 2) displayed on the operation display unit 51 of the settlement apparatus 50 is pressed down. When the collective settlement button 52a is pressed down, the settlement apparatus 50 becomes ready to receive a collective settlement. Then, at a time when the identification of a plurality of transactions to be collectively settled is finished, the confirmation button 52c displayed on the operation display unit 51 of the settlement apparatus 50 is pressed down. Thus, the transactions to be collectively settled can be designated, so that these transactions can be collectively settled.

In addition, when there are a plurality of tickets of the same price, the settlement apparatus 50 in this embodiment can designate a settlement splitting mode. When the settlement splitting mode is designated, the plurality of tickets of the same price can be separately settled. In the settlement apparatus 50 in this embodiment, when there are a plurality of tickets of the same prices, a settlement splitting button 52d is displayed on the operation display unit 51. By pressing down the settlement splitting button 52d, the tickets of the same price are separately settled. The tickets of the same price are, for example, tickets of the same destination.

### <<Operation / Effect >>

Next, an operation and effect of the embodiment as structured above is explained.

According to this embodiment, there are provided a plurality of reception terminal apparatuses 20 that are to be operated by one or more staffs of a ticket distributor (e.g., railroad company). In addition, at a position different from those of the reception terminal apparatuses 20, there is located the settlement apparatus 50 to which a customer makes a payment for the ticket which purchase request has been received by the reception terminal apparatus 20. The transaction identification unit can identify the information related to the transaction which purchase request has been received by the reception terminal apparatus 20, and the settlement process of the transaction can be performed by the settlement apparatus 50. Thus, according to this embodiment, an automatic settlement process can be performed by only a few settlement apparatuses 50. In addition, there is no increase in burden on the ticket distributor, and it is not necessary for the customer to wait for a long time near the ticket office.

This point is explained herebelow.

In an European station or the like where a train connection is difficult, a train ticket or the like has conventionally been sold via a staff in a ticket office. In the conventional manner, when a customer makes a request for purchasing a ticket to the staff, the staff inputs information related to the ticket to be purchased to a reception terminal apparatus. Then, the staff calculates a change amount of money by deducting a ticket price from a deposit amount of money handed from the customer. Thereafter, the staff takes the change out of a drawer, and delivers it by hand to the customer together with the ticket issued by the ticket issuance apparatus to the customer.

With respect to this operation, it can be considered to introduce, in place of the drawer, a settlement apparatus that can automatically settle up. However, in a station or the like where there are a large number of guests, there are a plurality of staffs in a ticket office. Thus, if such a settlement apparatus is provided for each staff, a large introduction cost is needed.

Alternatively, it can be considered that only one settlement apparatus is disposed in a ticket office, and each staff of a ticket distributor brings a deposit amount of money handed from a customer to the settlement apparatus so as to settle up. However, in this manner, for each transaction, the staff has to bring a deposit amount of money from a customer to the settlement apparatus, which increases a burden of the ticket distributor such as a railroad company. In addition, in this manner, when it takes a lot of time for a settlement process to be finished because the settlement apparatus is busy, a customer has to wait for a long time near the ticket office.

On the other hand, in this embodiment, there are provided a plurality of reception terminal apparatuses 20 that are to be operated by one or more staffs of a ticket distributor, and each reception terminal apparatus 20 is provided with the medium issuance apparatus 10 configured to issue the medium 90 in which the specific information such as a specific number is recorded. In addition, the specific information is stored in the server 41 in association with the transaction. In this embodiment, although the settlement apparatus 50 is located on a different position from those of the reception terminal apparatuses 20, the settlement apparatus 50 is provided with the medium reading apparatus 60 configured to read the specific information recorded in the medium 90. When the specific information recorded in the medium 90 is read by the medium reading apparatus 60, the server control unit 45 reads out specific information stored in the server memory unit 41, which conforms to the specific information read by the medium reading apparatus 60, so as to identify the transaction associated with the specific information. As a result, the transaction which purchase reservation was performed at the reception terminal apparatus 20 by the customer who made a request for purchasing the ticket to a staff of a ticket distributor can be settled by the settlement apparatus 50.

As described above, according to the present embodiment, even in a train station or the like where there are a large number of guests, and there are a plurality of staffs in a ticket office, it is not necessary to provide each staff with the corresponding settlement apparatus 50 (the number of settlement apparatus 50 is only one in this embodiment). Thus, an introduction cost for the apparatus can be restrained.

In addition, in this embodiment, the settlement apparatus 50 is located not in a wicket such as a counter but in a place that is freely accessible to a customer. Thus, the staff of the ticket distributor does not need to perform any task related to the settlement process, whereby there is no increase in burden on the ticket distributor such as a railroad company.

Further, since the settlement process is performed by the customer himself/herself, the customer can perform the settlement process at a convenient opportunity, and it is not necessary for the customer to wait for a long time near the ticket office.

Next, a series of steps according to this embodiment are described.

Firstly, a customer moves on to a staff of a ticket distributor sitting at an inquiry desk (see Fig. 1). At the inquiry desk, the customer makes a request for purchasing a ticket to the staff. The staff inputs information related to the ticket to be purchased to the reception terminal apparatus 20. At this time, the medium issuance apparatus 10 issues a medium 90 recording specific information associated with a transaction related to the ticket to be purchased. Then, by inputting the information related to the ticket to be purchased and the specific information in such a manner that they are associated with each other, the purchase request of the ticket desired to be purchased by the customer is received. The issued medium 90 is delivered from the staff to the customer.

Upon completion of the purchase reception, the specific information is stored in the server memory unit 41 of the server 40 in such a manner that the specific information is associated with the transaction related to the purchase reception. In addition, the fact that the provisional reservation of the ticket was made is stored in the server memory unit 41 (see Fig. 3).

Then, the customer moves on to the location of the settlement apparatus 50 so as to perform a settlement process (see Fig. 1). The customer causes the medium reading apparatus 60 to read the specific information recorded in his/her medium 90 (see Fig. 3). After the customer has caused the medium reading apparatus 60 to read the specific information recorded in the medium 90, the server control unit 45 reads out the specific information stored in the server memory unit 41, which conforms to the specific information read by the medium reading apparatus 60, so as to identify the transaction associated with the specific information. As a result, the price of the ticket which purchase request was made by the customer, other ticket information and so on are displayed on the operation display unit 51 of the settlement apparatus 50. When the customer deposits money to the money settlement apparatuses 100, 200 and presses down the deposition receipt button 52b, the settlement process is completed (see Fig. 2). When there is a change, money corresponding to a change amount of money obtained by deducting the ticket price from the deposit amount of money is dispensed as a change from the money settlement apparatuses 100, 200, so that the cash settlement process is completed.

Upon completion of the settlement process, a ticket is issued from the ticket issuance apparatus 30 located adjacently to the settlement apparatus 50, and the customer receives the ticket. When the ticket is issued, the provisional reservation condition becomes a definitive reservation condition, and the fact is stored in the server memory unit 41 (see Fig. 3). When the definitive reservation is stored in the server memory unit 41, the transaction for the customer is finished.

This embodiment is advantageous in that, since the ticket issuance apparatus 30 is located adjacently to the settlement apparatus 50, the issued ticket can be received immediately after the settlement process.

Namely, like a conventional case in which a ticket is issued in a ticket office, if the customer performs only the settlement process and the staff of the ticket distributor performs the issuance of a ticket, the customer who has done the settlement process by the settlement apparatus 50 has to again move on to the staff, which is troublesome to the customer. On the other hand, in this embodiment, since the ticket issuance apparatus 30 is located adjacently to the settlement apparatus 50, the customer can receive an issued ticket immediately after completion of the settlement process. Thus, this embodiment can advantageously save the above troublesome task. This effect can be naturally achieved when the ticket issuance apparatus 30 and the settlement apparatus 50 are located integrally with each other.

In a case where a customer performs only a settlement process and a staff of a ticket distributor performs issuance of a ticket like a conventional case, a medium reading apparatus configured to read the specific information recorded in the medium 90 is provided near the staff. This medium reading apparatus includes an apparatus such as a personal computer, to which specific information can be manually inputted.

In addition, this embodiment has the collective settlement function for collectively settling a total amount of payments of a plurality of transactions. When the use of the collective settlement function is designated, a total amount of payments of a plurality of transactions can be collectively settled.

An example of the use of the collective settlement function is explained herebelow, which is a case where a plurality of customers has made requests for purchasing tickets to different staffs.

Firstly, the respective customers make requests for purchasing tickets to the different staffs (see Fig. 1). Thus, each customer has a medium 90 recording specific information associated with his/her transaction.

Then, a representative of these customers moves on to the location of the settlement apparatus 50 so as to perform a settlement process. The representative presses down the collective settlement button 52a displayed on the operation display unit 51 of the settlement apparatus 50 (see Fig. 2). Thus, the settlement apparatus 50 becomes ready to receive the collective settlement. Thereafter, the representative causes the medium reading apparatus 60 to read the specific information recorded in the plurality of media 90, and the plurality of transactions to be collectively settled are identified. At a time when the reading of the specific information of the plurality of transactions to be collectively settled is finished, by pressing down the confirmation button 52c displayed on the operation display unit 51 of the settlement apparatus 50, a total amount of money of the plurality of transactions, ticket information and so on are displayed on the operation display unit 51. Then, the representative deposits money corresponding to the total amount of money into the money settlement apparatuses 100, 200, so as to finish the settlement process. At this time, the settlement process of the plurality of transactions is finished.

As described above, according to this embodiment, a total amount of payments of a plurality of transactions can be collectively settled. Thus, this embodiment is advantageous in that a plurality of customers can separately purchase tickets, because they want to rapidly purchase the tickets, for example.

It can be supposed that such a collective settlement function is also used when one customer remembered that he/she had forgotten purchase of a ticket.

In this embodiment, when there are a plurality of tickets of the same price, the settlement splitting mode can be designated in the settlement apparatus 50. When the settlement splitting mode is designated, the tickets of the same price can be separately settled.

A flow of using the settlement splitting mode is briefly explained.

Firstly, a representative of a plurality of customers makes a request for purchasing tickets of the same price, such as tickets of the same destination, to one staff (see Fig. 1). Thus, purchase of the tickets of the same price is recognized as one transaction.

Then, the plurality of customers move on to the location of the settlement apparatus 50 so as to perform respective settlement processes. One of the plurality of customers presses down the settlement splitting button 52d displayed on the operation display unit 51 (see Fig. 2). Thus, the tickets of the same price can be separately settled. Each customer can deposit money to the money settlement apparatuses 100, 200 so as to complete each settlement process. At a time when all the customers finish the settlement processes, the settlement processes of the transaction are completed.

In the settlement splitting mode, the representative of the plurality of customers may perform the settlement process, instead of the above case in which each customer performs the settlement process. In this modified case, the representative of the customers can press down the settlement splitting button 52d displayed on the operation display unit 51 to collectively settle the plurality of tickets. When there is a change as a result of the collective payment, the change is dispensed as one or more coins and/or banknotes of suitable denomination(s), the number which is distributable to the respective customers.

As described above, according to this embodiment, when there are a plurality of tickets of the same price, the tickets of the same price can be separately settled by designating the settlement splitting mode. Thus, when a plurality of customers want to split the settlement, this embodiment is advantageous in that the settlement can be split, without detailed calculation or the like.

### Second Embodiment

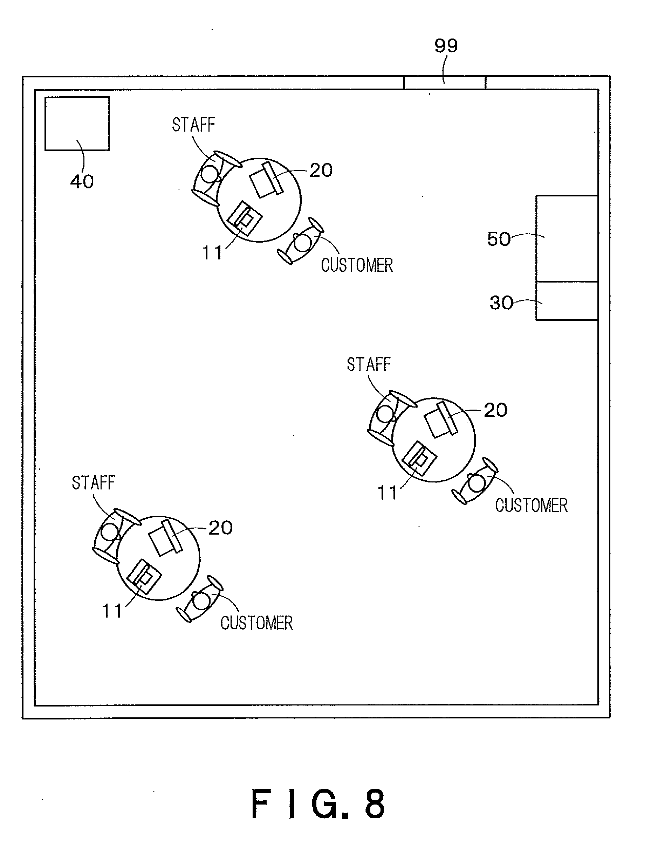

Next, a second embodiment of the present invention is explained with reference mainly to Figs. 8 to 10.

In the first embodiment, the transaction identification unit includes the medium issuance apparatus 10 disposed on each reception terminal apparatus 20, the server 40 having the server memory unit 41 and the server control unit 45, and the medium reading apparatus 60 disposed on the settlement apparatus 50. The server control unit 45 reads out specific information stored in the server memory unit 41, which conforms to specific information read by the medium reading apparatus 60, so as to identify the transaction associated with the specific information.

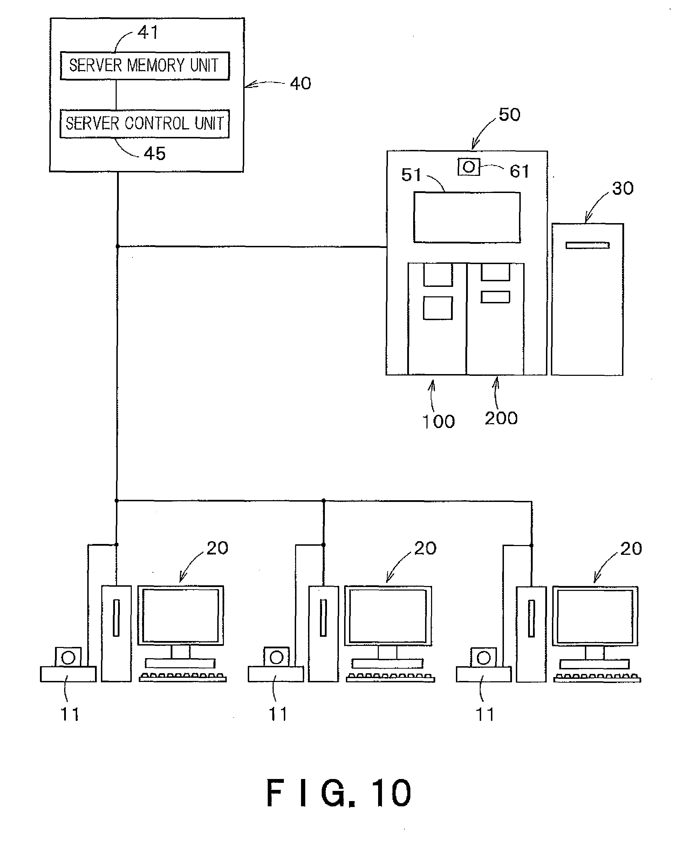

On the other hand, in the second embodiment, the transaction identification unit includes a first biometric-information acquiring apparatus 11 configured to acquire biometric information of a customer who makes a purchase request to the reception terminal apparatus 20, and a second biometric-information acquiring apparatus 61 configured to acquire biometric information of a customer who makes a payment to the settlement apparatus 50. The transaction identification unit compares the biometric information obtained by the first biometric-information acquiring apparatus 11 with the biometric information obtained by the second biometric-information acquiring apparatus 61, so as to identify the transaction (see Fig. 10).

To be more specific, in the second embodiment, the server memory unit 41 of the server 40 stores the biometric information obtained by the first biometric-information acquiring apparatus 11 in such a manner that the biometric information is associated with a transaction. Then, the server control unit 45 of the server 40 reads out, from the server memory unit 41, the biometric information obtained by the first biometric-information acquiring apparatus 11, which conforms to the biometric information obtained by the second biometric-information acquiring apparatus 61, so as to identify the transaction associated with the biometric information.

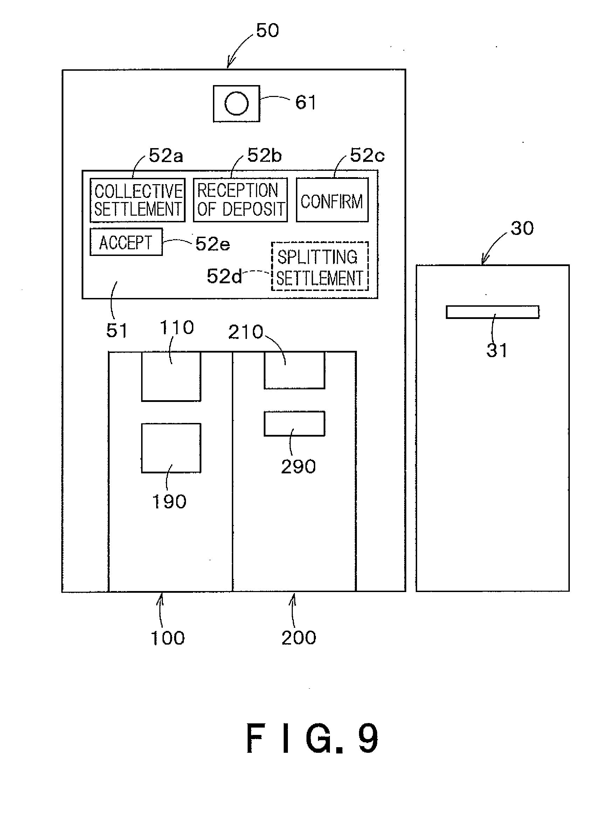

Various types of authentication such as a face authentication, a fingerprint authentication, vein authentication and a retina authentication, can be used as a biometric authentication. In this embodiment, there is described an example in which a face authentication is used as the biometric authentication. Thus, the first biometric-information acquiring apparatus 11 in this embodiment is a first imaging apparatus 11 configured to acquire information related to a face (hereinafter "face information"), and the second biometric-information acquiring apparatus 61 is a second imaging apparatus 61 configured to acquire face information (see Fig. 10). In addition, a face-information acquisition-permitting button (biometric-information acquisition-permitting button) 52e for permitting the second imaging apparatus 61 to acquire face information of a customer is displayed on the operation display unit 51 of the settlement apparatus 50 in this embodiment (see Fig. 9).

In the second embodiment, the other structure is substantially the same as that of the first embodiment. In the second embodiment, the same part as that of the first embodiment is shown by the same reference number, and detailed explanation thereof is omitted.

This embodiment can also provide the same effect as that of the first embodiment. Since the effect is explained in detail in the first embodiment, only an effect peculiar to this embodiment is explained. In addition, the effect is explained in the course of the explanation of a series of steps of this embodiment.

Firstly, a customer moves on to a staff of a ticket distributor sitting at an inquiry desk (see Fig. 8). At the inquiry desk, the customer makes a request for purchasing a ticket to the staff. The staff inputs information related to the ticket to be purchased to the reception terminal apparatus 20. At this time, face information of the customer who made the purchase request is acquired by the first imaging apparatus 11 located in the vicinity of the reception terminal apparatus 20. Then, by inputting the information related to the ticket to be purchased and the face information of the customer in such a manner that they are associated with each other, the purchase request of the ticket desired to be purchased by the customer is received.

Upon completion of the purchase reception, the face information of the customer is stored in the server memory unit 41 of the server 40 in such a manner that the face information is associated with the transaction related to the purchase reception. In addition, the fact that the provisional reservation of the ticket was made is stored in the server memory unit 41 (see Fig. 10).

Then, the customer moves on to the location of the settlement apparatus 50 so as to perform a settlement process (see Fig. 8). When the customer presses down the face information acquisition permitting button 52e (see Fig. 9), face information of the customer is acquired by the second imaging apparatus 61. In this manner, after the face information of the customer has been acquired by the second imaging apparatus 61, the server control unit 45 reads out the face information acquired by the first imaging apparatus 11, which conforms to the face information acquired by the second imaging apparatus 61, so as to identify the transaction associated with the face information (see Fig. 10). As a result, the price of the ticket which purchase request was made by the customer, other ticket information and so on are displayed on the operation display unit 51 of the settlement apparatus 50. When the customer deposits money to the money settlement apparatuses 100, 200 and presses down the deposition receipt button 52b, the settlement process is completed (see Fig. 9). When there is a change, money corresponding to a change amount of money obtained by deducting the ticket price from the deposit amount of money is dispensed as a change from the money settlement apparatuses 100, 200, so that the cash settlement process is completed.

Upon completion of the settlement process, a ticket is issued from the ticket issuance apparatus 30 located adjacently to the settlement apparatus 50, and the customer receives the ticket. When the ticket is issued, the provisional reservation condition becomes a definitive reservation condition, and the fact is stored in the server memory unit 41. When the definitive reservation is stored in the server memory unit 41, the transaction for the customer is finished.

According to this embodiment, in addition to the effect achieved by the first embodiment, there is obtained an effect in which the customer does not need to carry with him/her the "medium" described in the first embodiment, from a time point when the customer makes a ticket purchase request (ticket purchase reception) to a time point when the customer receives an issued ticket. Thus, a running cost can be reduced. In addition, it can be prevented that the "medium" is lost so that a settlement process cannot be performed.

In this embodiment, a customer may perform only a settlement process, and a staff of a ticket distributor may perform issuance of a ticket, like a conventional case. In this case, the first imaging apparatus 11 acquires face information of the customer to identify the transaction, so that a corresponding ticket is issued.

### Third Embodiment

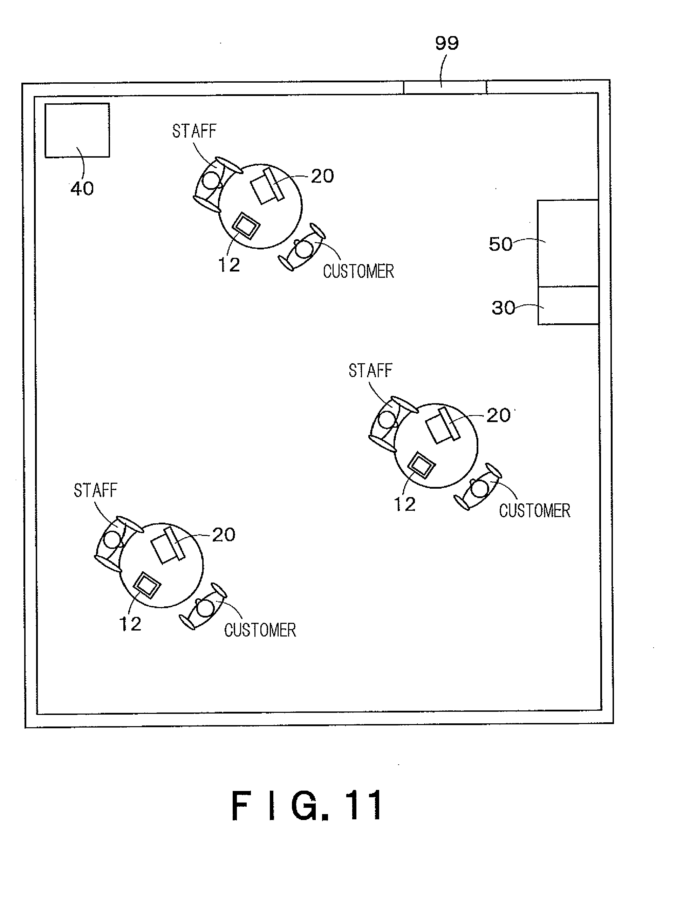

Next, a third embodiment of the present invention is explained with reference mainly to Figs. 11 to 13.

As described above, in the first embodiment, the transaction identification unit includes the medium issuance apparatus 10 disposed on each reception terminal apparatus 20, the server 40 having the server memory unit 41 and the server control unit 45, and the medium reading apparatus 60 disposed on the settlement apparatus 50. The server control unit 45 reads out specific information stored in the server memory unit 41, which conforms to specific information read by the medium reading apparatus 60, so as to identify the transaction associated with the specific information.

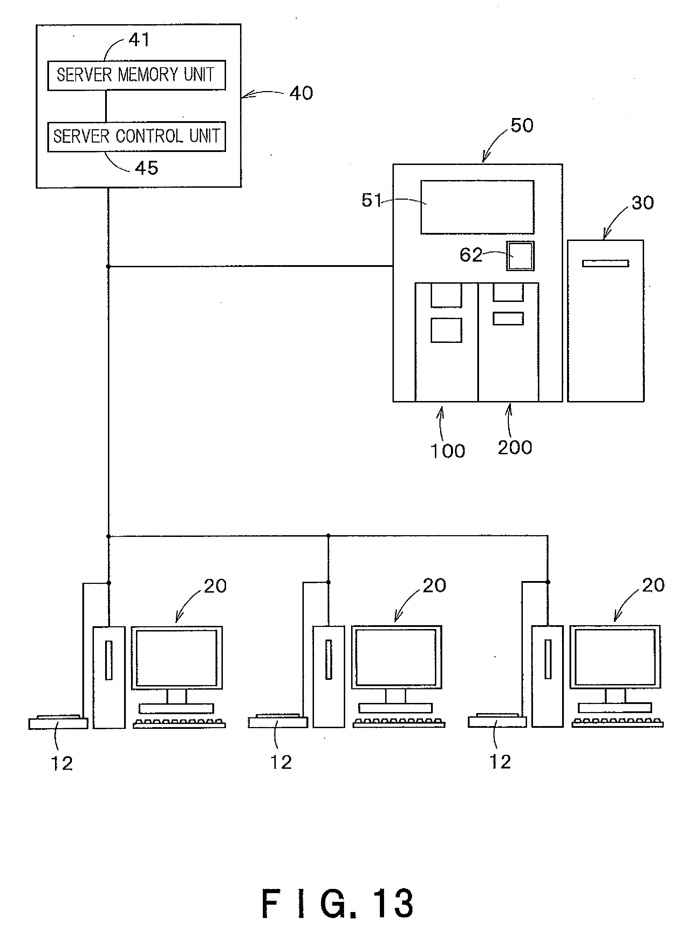

On the other hand, in the third embodiment, the transaction identification unit includes a first article-information acquiring apparatus 12 configured to acquire intrinsic information of an article possessed by a customer who makes a purchase request to the reception terminal apparatus 20, and a second article information acquiring apparatus 62 configured to acquire intrinsic information of an article possessed by a customer who makes a payment to the settlement apparatus 50. The transaction identification unit compares the intrinsic information of the article obtained by the first article-information acquiring apparatus 12 with the intrinsic information of the article obtained by the second article-information acquiring apparatus 62, so as to identify the transaction (see Fig. 13).

To be more specific, in the third embodiment, the server memory unit 41 of the server 40 stores the intrinsic information of the article obtained by the first article-information acquiring apparatus 12 in such a manner that the intrinsic information of the article is associated with a transaction. Then, the server control unit 45 of the server 40 reads out, form the server memory unit 41, the intrinsic information of the article obtained by the first article-information acquiring apparatus 12, which conforms to the intrinsic information of the article obtained by the second article-information acquiring apparatus 62, so as to identify the transaction associated with the intrinsic information of the article. An example of intrinsic (recognition) information peculiar to a customer may be an ID number recorded in a SIM card (Subscriber Identity Module Card) of a mobile phone.

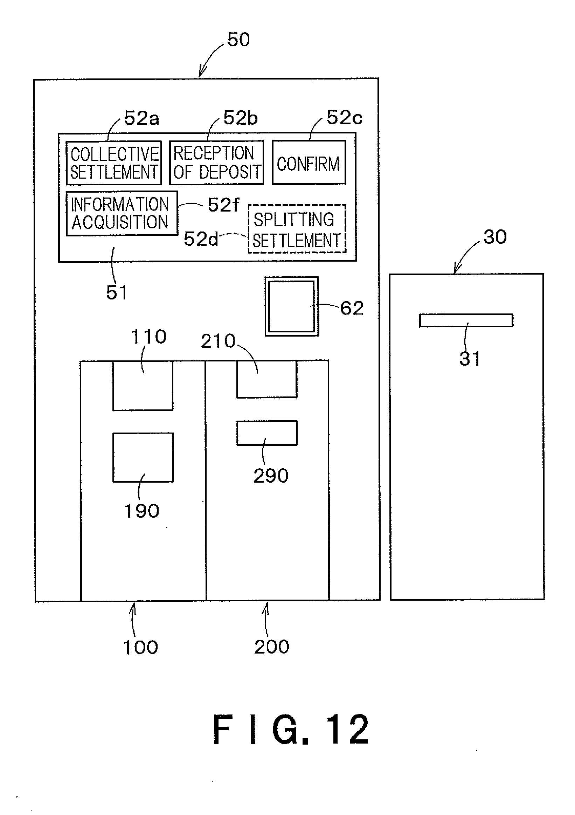

Any article can be used as an article for use in an article authentication as long as it has recognition information peculiar to a customer, such as a mobile phone, a credit card, and so on. In this embodiment, there is described an example in which an article authentication is performed by means of a mobile phone. Thus, the first article-information acquiring apparatus 12 is a first mobile-phone-information acquiring apparatus 12 configured to acquire intrinsic information such as an ID number of a mobile phone, and the second article-information acquiring apparatus 62 is a second mobile-phone-information acquiring apparatus 62 configured to acquire intrinsic information of a mobile phone (see Fig. 13). In addition, an information acquiring button (article-information acquiring button) 52f configured to start acquisition of intrinsic information of a mobile phone is displayed on the operation display unit 51 of the settlement apparatus 50 in this embodiment (see Fig. 12).

In the third embodiment, the other structure is substantially the same as that of the first embodiment. In the third embodiment, the same part as that of the first embodiment is shown by the same reference number, and detailed explanation thereof is omitted.

This embodiment can also provide the same effect as that of the first embodiment. Since the effect is explained in detail in the first embodiment, only an effect peculiar to this embodiment is explained. In addition, the effect is explained in the course of the explanation of a series of steps of this embodiment.

Firstly, a customer moves on to a staff of a ticket distributor sitting at an inquiry desk (see Fig. 11). At the inquiry desk, the customer makes a request for purchasing a ticket to the staff. The staff inputs information related to the ticket to be purchased to the reception terminal apparatus 20. At this time, intrinsic information of a mobile phone possessed by the customer who made the purchase request is acquired by the first mobile-phone-information accruing apparatus 12 located in the vicinity of the reception terminal apparatus 20. Then, by inputting the information related to the ticket to be purchased and the mobile-phone intrinsic information in such a manner that they are associated with each other, the purchase request of the ticket desired to be purchased by the customer is received.

Upon completion of the purchase reception, the mobile-phone intrinsic information is stored in the server memory unit 41 of the server 40 in such a manner that the mobile-phone intrinsic information is associated with the transaction related to the purchase reception. In addition, the fact that the provisional reservation of the ticket was made is stored in the server memory unit 41.

Then, the customer moves on to the location of the settlement apparatus 50 so as to perform a settlement process (see Fig. 11). The customer brings his/her mobile phone close to the second mobile-phone-information acquiring apparatus 62, and presses down the information acquiring button 52f displayed on the operation display unit 51 (see Fig. 12). Thus, the mobile-phone intrinsic information is read by the second mobile-phone-information acquiring apparatus 62. In this manner, after the mobile-phone intrinsic information has been read by the second mobile-phone-information acquiring apparatus 62, the server control unit 45 reads out the mobile-phone intrinsic information acquired by the first mobile-phone-information acquiring apparatus 12, which conforms to the mobile-phone intrinsic information acquired by the second mobile-phone-information acquiring apparatus 62, so as to identify the transaction associated with the mobile-phone peculiar information (see Fig. 13). As a result, the price of the ticket which purchase request was made by the customer, other ticket information and so on are displayed on the operation display unit 51 of the settlement apparatus 50. When the customer deposits money to the money settlement apparatuses 100, 200 and presses down the deposition receipt button 52b, the settlement process is completed (see Fig. 12). When there is a change, money corresponding to a change amount of money obtained by deducting the ticket price from the deposit amount of money handed from the customer is dispensed as a change from the money settlement apparatuses 100, 200, so that the cash settlement process is completed.

Upon completion of the settlement process, a ticket is issued from the ticket issuance apparatus 30 located adjacently to the settlement apparatus 50, and the customer receives the ticket. When the ticket is issued, the provisional reservation condition becomes a definitive reservation condition, and the fact is stored in the server memory unit 41. When the definitive reservation is stored in the server memory unit 41, the transaction for the customer is finished.

According to this embodiment, in addition to the effect achieved by the first embodiment, there is obtained an effect in which the customer does not need to carry with him/her the "medium" described in the first embodiment, from a time point when the customer makes a ticket purchase request (ticket purchase reception) to a time point when the customer receives an issued ticket. Thus, a running cost can be reduced. In addition, it can be prevented that the "medium" is lost so that a settlement process cannot be performed.

In this embodiment, a customer may perform only a settlement process, and a staff of a ticket distributor may perform issuance of a ticket, like a conventional case. In this case, the first mobile-phone-information acquiring apparatus 12 reads intrinsic information of a mobile phone to identify the transaction, so that a corresponding ticket is issued.

Hereabove, there is described the example in which the third embodiment is applied to the first embodiment. However, not limited thereto, it is possible to apply the third embodiment to the second embodiment. In this case, both a biometric authentication and an article authentication can be used.

### Fourth Embodiment

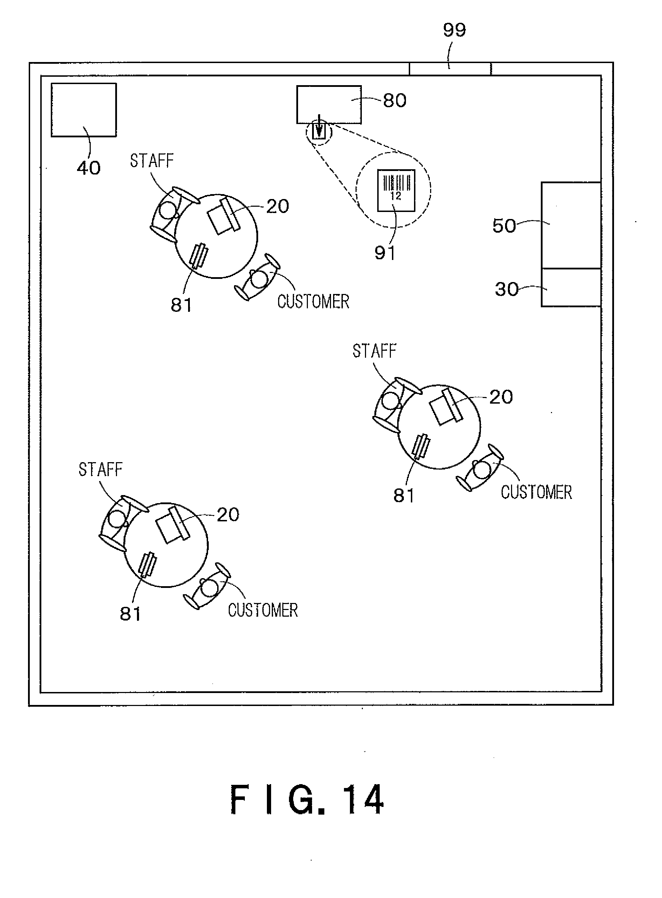

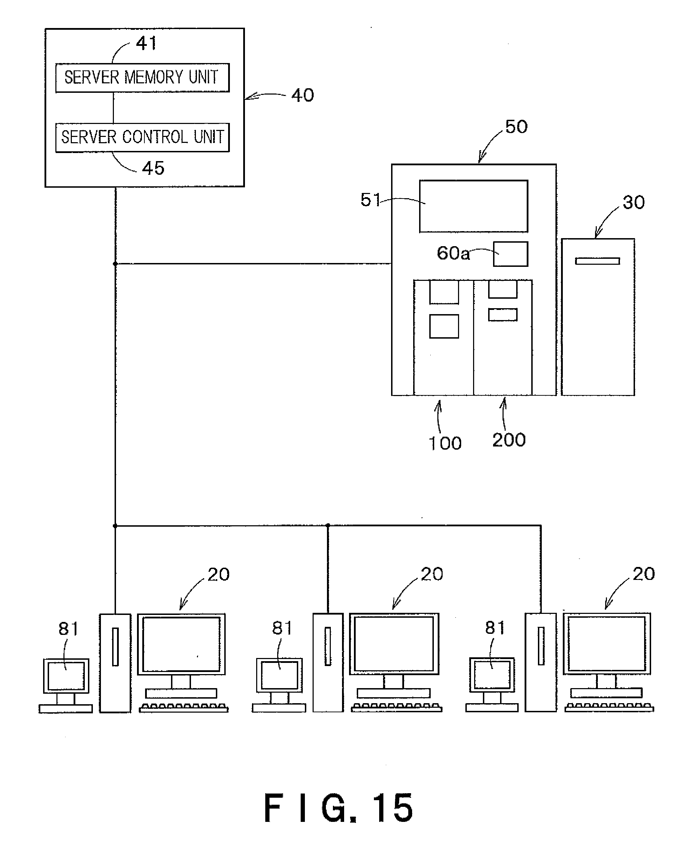

Next, a fourth embodiment of the present invention is explained with reference mainly to Figs. 14 and 15.

As described above, in the first embodiment, the transaction identification unit includes the medium issuance apparatus 10 disposed on each reception terminal apparatus 20, the server 40 having the server memory unit 41 and the server control unit 45, and the medium reading apparatus 60 disposed on the settlement apparatus 50. The server control unit 45 reads out specific information stored in the server memory unit 41, which conforms to specific information read by the medium reading apparatus 60, so as to identify the transaction associated with the specific information.

On the other hand, in the fourth embodiment, there is provided an automatic reception apparatus 80 configured to issue to the customer a medium 91 recording a reception number (see Fig. 14). In addition, the reception terminal apparatus 20 includes a reception display unit 81 configured to display the reception number (see Fig. 15). In addition, the server memory unit 41 stores the reception number associated with the transaction, and the server control unit 45 reads out the reception number stored in the server memory unit 41, which conforms to the reception number read by a medium reading apparatus 60a disposed on the settlement apparatus 50, so as to identify the transaction associated with the reception number.

In the fourth embodiment, the other structure is substantially the same as that of the first embodiment. In the fourth embodiment, the same part as that of the first embodiment is shown by the same reference number, and detailed explanation thereof is omitted.

This embodiment can also provide the same effect as that of the first embodiment. Since the effect is explained in detail in the first embodiment, only an effect peculiar to this embodiment is explained. In addition, the effect is explained in the course of the explanation of a series of steps of this embodiment.

Firstly, a customer receives a medium 91 recording a reception number, which has been issued by the automatic reception apparatus 80 (see Fig. 14). In addition to the reception number, reading information such as a barcode corresponding to the reception number is also recorded in the medium 91. As shown in Fig. 14, the reception number and the barcode corresponding to the reception number are printed on the medium 91 in this embodiment.

Then, the reception number is displayed on the reception display unit 81 of the reception terminal apparatus 20. When the reception number is displayed on the reception display unit 81, the customer carrying the medium 91 on which the reception number is printed moves on to a staff of a ticket distributor sitting at an inquiry desk (see Fig. 14). At the inquiry desk, the customer makes a request for purchasing a ticket to the staff. The staff inputs information related to the ticket to be purchased to the reception terminal apparatus 20 in such a manner that the information is associated with the reception number, whereby the purchase request of the ticket desired to be purchased by the customer is received.

Upon completion of the purchase reception, the reception number is stored in the server memory unit 41 of the server 40 in such a manner that the reception number is associated with the transaction related to the purchase reception. In addition, the fact that the provisional reservation of the ticket was made is stored in the server memory unit 41 (see Fig. 15).

Then, the customer moves on to the location of the settlement apparatus 50 so as to perform a settlement process (see Fig. 14). The customer causes the medium reading apparatus 60a to read the barcode related to the reception number, which is recorded in his/her medium 91 (see Fig. 15). In this manner, after the customer has caused the medium reading apparatus 60a to read the reception number recorded in the medium 91, the server control unit 45 reads out the reception number stored in the server memory unit 51, which conforms to the reception number read by the medium reading apparatus 60a, so as to identify the transaction associated with the reception number. As a result, the price of the ticket which purchase request was made by the customer, other ticket information and so on are displayed on the operation display unit 51 of the settlement apparatus 50. When the customer deposits money to the money settlement apparatuses 100, 200 and presses down the deposition receipt button 52b, the settlement process is completed. When there is a change, money corresponding to a change amount of money obtained by deducting the ticket price from the deposit amount of money is dispensed as a change from the money settlement apparatuses 100, 200, so that the cash settlement process is completed.

Upon completion of the settlement process, a ticket is issued from the ticket issuance apparatus 30 located adjacently to the settlement apparatus 50, and the customer receives the ticket. When the ticket is issued, the provisional reservation condition becomes a definitive reservation condition, and the fact is stored in the server memory unit 41. When the definitive reservation is stored in the server memory unit 41, the transaction for the customer is finished.

According to this embodiment, even when a lot of customers wait in a line for the inquiry desk, each customer can not only easily confirm his/her turn by means of the reception number, but also can perform the series of operations from the purchase reception to the ticket issuance via the reception number.

In this embodiment, a customer may perform only a settlement process, and a staff of a ticket distributor may perform issuance of a ticket, like a conventional case. In this case, when the reception number is again displayed on the reception display unit 81 and the customer comes to the staff, the ticket is issued. In this case, a medium reading apparatus is provided for the staff. This medium reading apparatus includes an apparatus such as a personal computer, to which the reception number can be manually inputted.

Hereabove, there is described the example in which the fourth embodiment is applied to the first embodiment. However, not limited thereto, it is possible to apply the fourth embodiment to the second embodiment. In addition, it is possible to apply the fourth embodiment to the third embodiment. Moreover, it is possible to apply the fourth embodiment to a combination of the second embodiment and the third embodiment.

### Fifth Embodiment

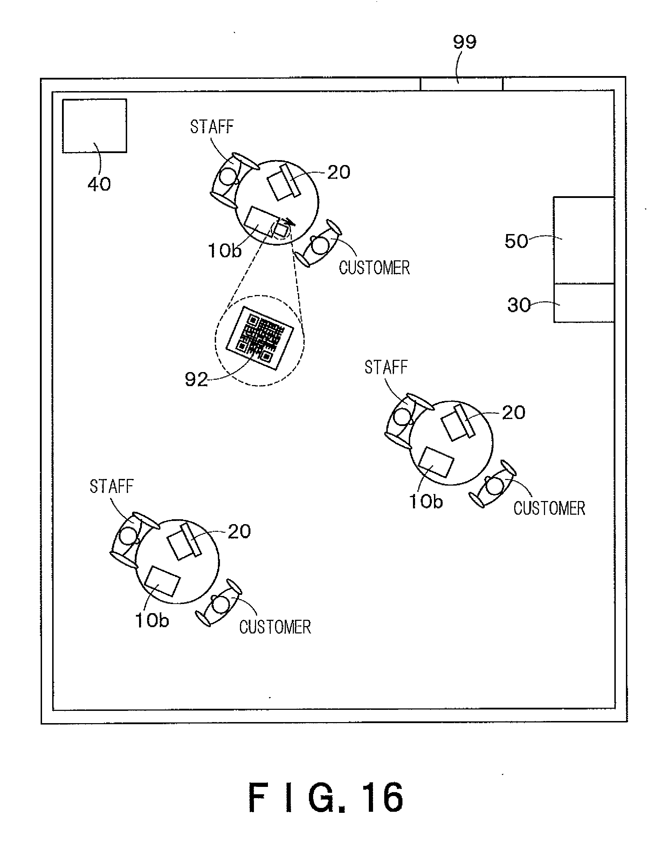

Next, a fifth embodiment of the present invention is explained with reference mainly to Fig. 16 to 18.

As described above, in the first embodiment, the transaction identification unit includes the medium issuance apparatus 10 disposed on the reception terminal apparatus 20, the server 40 having the server memory unit 41 and the server control unit 45, and the medium reading apparatus 60 disposed on the settlement apparatus 50. The server control unit 45 reads out specific information stored in the server memory unit 41, which conforms to specific information read by the medium reading apparatus 60, so as to identify the transaction associated with the specific information.

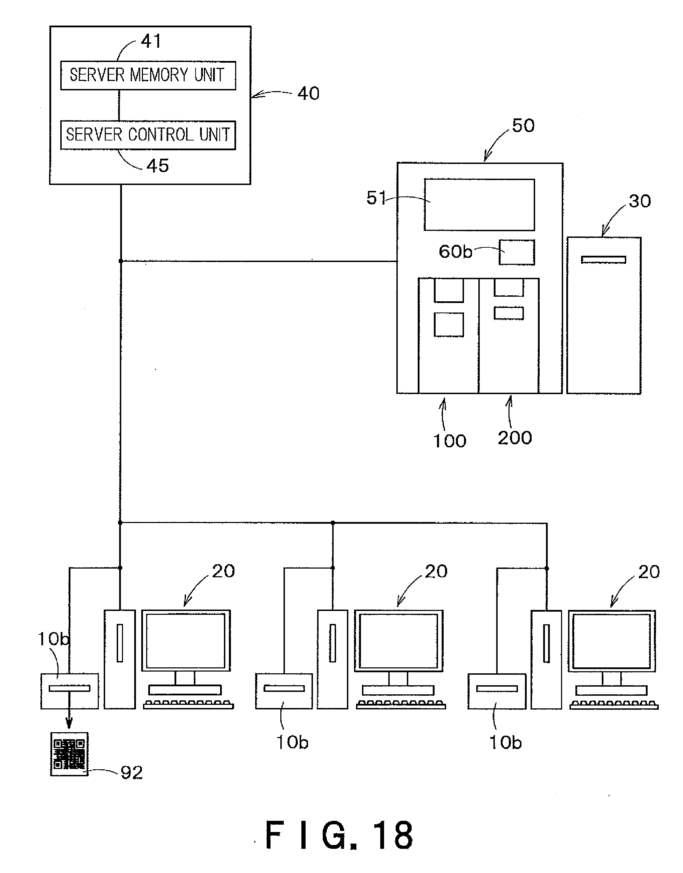

On the other hand, in the fifth embodiment, the transaction identification unit includes a medium issuance apparatus 10b disposed on each reception terminal apparatus 20 and configured to issue a medium 92 recording contents of the transaction, and a medium reading apparatus 60b disposed on the settlement apparatus 50 and configured to read the contents of the transaction recorded in the medium 92. Based on the contents of the transaction read by the medium reading apparatus 60b, a settlement process is performed by the settlement apparatus 50 (see Fig. 18). For example, a two-dimensional barcode showing the contents of the transaction is recorded in the medium 92.

In the fifth embodiment, the other structure is substantially the same as that of the first embodiment. In the fifth embodiment, the same part as that of the first embodiment is shown by the same reference number, and detailed explanation thereof is omitted.

This embodiment can also provide the same effect as that of the first embodiment. Since the effect is explained in detail in the first embodiment, only an effect peculiar to this embodiment is explained. In addition, the effect is explained in the course of the explanation of a series of steps of this embodiment.

Firstly, a customer moves on to a staff of a ticket distributor sitting at an inquiry desk (see Fig. 16). At the inquiry desk, the customer makes a request for purchasing a ticket to the staff. The staff inputs information related to the ticket to be purchased to the reception terminal apparatus 20. Thus, the purchase request of the ticket desired to be purchased by the customer is received. At this time, the fact that the provisional reservation of the ticket was made is stored in the server memory unit 41 (see Fig. 18).

When the ticket purchase reception is performed as described above, a medium 92, which records the contents of the transaction which purchase request has been received, is issued from the medium issuance apparatus 10b. After the medium 92 has been issued, the staff delivers the medium 92 to the customer.

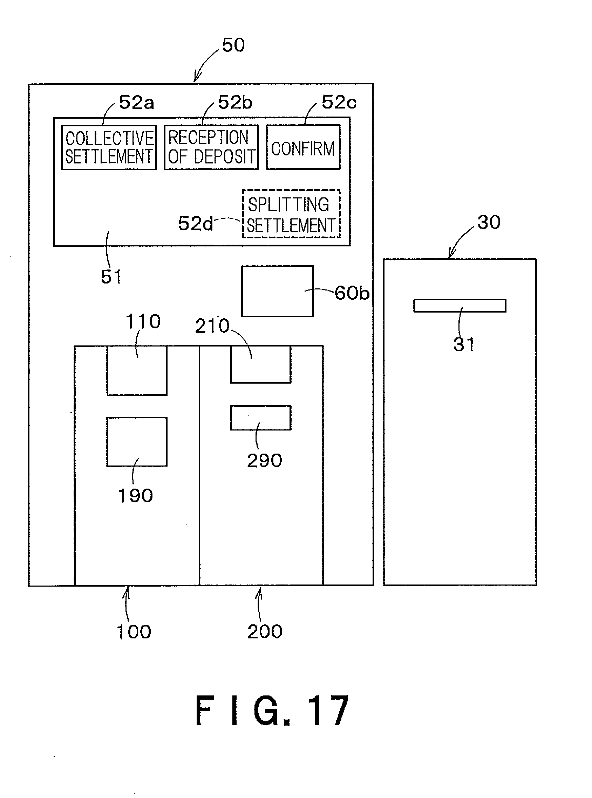

Then, the customer moves on to the location of the settlement apparatus 50 so as to perform a settlement process (see Fig. 16). The customer causes the medium reading apparatus 60b to read the contents of the transaction recorded in his/her medium 92 (see Fig. 17). After the customer has caused the medium reading apparatus 60b to read the contents of the transaction recorded in his/her medium 92, the price of the ticket which purchase request was made by the customer, other ticket information and so on are displayed on the operation display unit 51 of the settlement apparatus 50. When the customer deposits money to the money settlement apparatuses 100, 200 and presses down the deposition receipt button 52b, the settlement process is completed. When there is a change, money corresponding to a change amount of money obtained by deducting the ticket price from the deposit amount of money is dispensed as a change from the money settlement apparatuses 100, 200, so that the cash settlement process is completed.

Upon completion of the settlement process, a ticket is issued from the ticket issuance apparatus 30 located adjacently to the settlement apparatus 50, and the customer receives the ticket. When the ticket is issued, the provisional reservation condition becomes a definitive reservation condition, and the fact is stored in the server memory unit 41 (see Fig. 18). When the definitive reservation is stored in the server memory unit 41, the transaction for the customer is finished.

According to this embodiment, it is not necessary for the server memory unit 41 to store the contents of the transaction, and also it is not necessary for the server control unit 45 to read out information stored in the server memory unit 41. Thus, the burden on the server 40 can be decreased, and a server of lower specifications can be used as the server 40.

Hereabove, there is described the example in which the fifth embodiment is applied to the first embodiment. However, not limited thereto, the aforementioned respective embodiments can be suitably combined. To be more specific, it is possible to apply the fifth embodiment to the second embodiment, it is possible to apply the fifth embodiment to the third embodiment, and it is possible to apply the fifth embodiment to the fourth embodiment. In addition, it is possible to apply the fifth embodiment to a combination of the second embodiment and the third embodiment, a combination of the second embodiment and the fourth embodiment, and a combination of the third embodiment and the fourth embodiment, respectively. Further, it is possible to apply the fifth embodiment to a combination of the second embodiment, third embodiment and the fourth embodiment.

### Sixth Embodiment

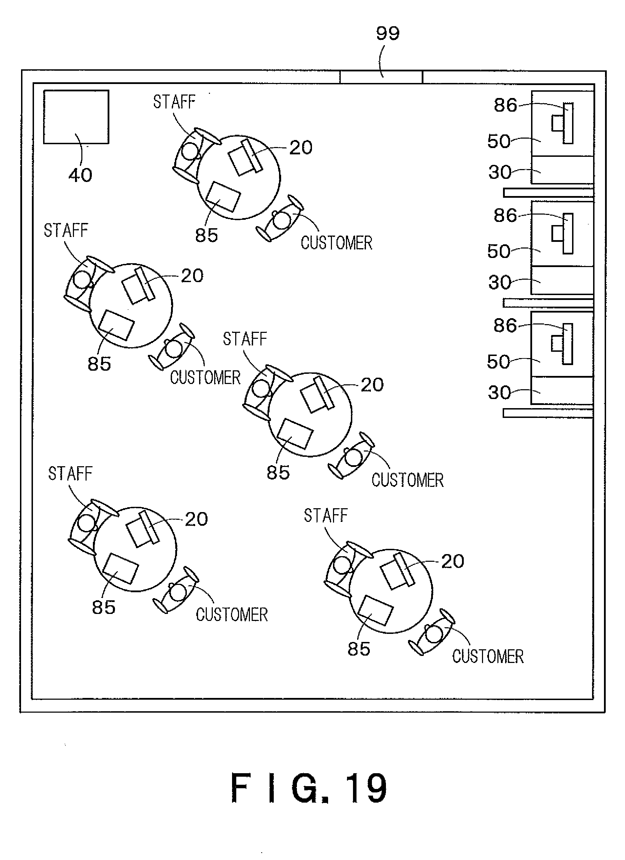

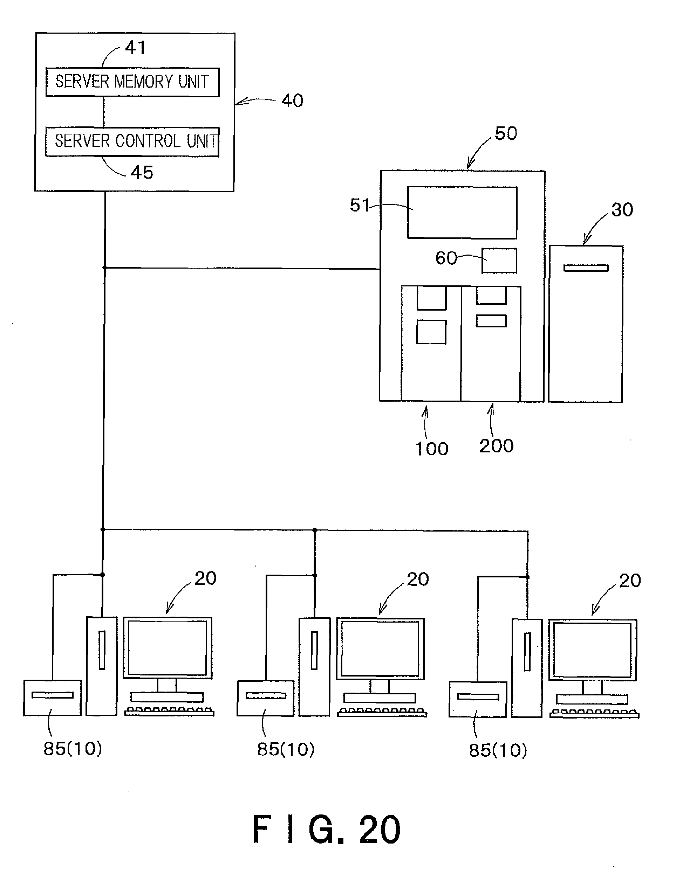

Next, a sixth embodiment of the present invention is explained with reference mainly to Figs. 19 and 20.

In the above respective embodiments, only one settlement apparatus 50 is provided. On the other hand, in this embodiment, a plurality of the settlement apparatus 50 are provided. In addition, in this embodiment, there is disposed an notification unit 85 configured to notify the customer of a settlement apparatus 50 that should be used and/or another settlement apparatus 50 that should not be used, based on information of an amount of cash or information of a status of the money settlement apparatuses 100, 200 of each settlement apparatus 50.

In this embodiment, the server control unit 45 collects the information of an amount of cash and the information of a status of each settlement apparatus 50. Upon receipt of an operation command from the server control unit 45, the notification unit 85 notifies the customer which settlement apparatus 50 should be used. Herein, a status of each of the money settlement apparatuses 100, 200 means a condition in which each of the money settlement apparatuses 100, 200 is in the course of depositing, in the course of dispensing, in the course of waiting, or the like.

In addition, in this embodiment, there is provided in the store a queueing-condition acquiring unit 86 such as an imaging apparatus configured to acquire information related to a queueing-condition of each settlement apparatus 50. Based on the information acquired by the queueing-condition acquiring unit 86, the server control unit 45 gives an operation command to the notification unit 85, and thus the notification unit 85 notifies the customer of a settlement apparatus 50 that should be used and/or another settlement apparatus 50 that should not be used.

In the sixth embodiment, the other structure is substantially the same as those of the first to fifth embodiments. In the sixth embodiment, the same part as those of the first to fifth embodiments is shown by the same reference number, and detailed explanation thereof is omitted. The embodiment shown in Fig. 20 is based on Fig. 1.

This embodiment can also provide the same effect as those of the first to fifth embodiments. Since the effect is explained in detail in the first embodiment, only an effect peculiar to this embodiment is explained.

According to this embodiment, the notification unit 85 makes an announcement based on the information of an amount of cash of the money settlement apparatuses 100, 200 of each settlement apparatus 50. Specifically, when an amount of cash in each of the money settlement apparatuses 100, 200 is full or near full, each of the money settlement apparatuses 100, 200 cannot receive any deposited money. Alternatively, when a change is insufficient, each of the money settlement apparatuses 100, 200 cannot dispense any change. In these cases, the notification unit 85 receives an operation command from the server control unit 45, and notifies the customer that the customer should not perform a settlement process by the settlement apparatus 50 including the above money settlement apparatuses 100, 200. Thus, the use of the money settlement apparatuses 100, 200, which are in a full or near full condition so that they cannot receive any deposited money or which are short of change, can be avoided. As a result, it can be prevented that the money settlement apparatuses 100, 200 are stopped, in order to collect money from the money settlement apparatuses 100, 200 or to replenish the money settlement apparatuses 100, 200 with money.

In addition, according to this embodiment, the notification unit 85 makes an announcement based on the status of each of the money settlement apparatuses 100, 200 in each settlement apparatus 50. For example, suppose that a money depositing process is performed in the certain money settlement apparatuses 100, 200 while a money dispensing process is performed in the other money settlement apparatuses 100, 200. In this case, the notification unit 85 receives an operation command from the server control unit 45, and notifies the customer that the customer should perform a settlement process in the settlement apparatus 50 including the other money settlement apparatuses 100, 200. Thus, it is possible to notify the customer of a possibly low-latency settlement apparatus 50.

In addition, according to this embodiment, the notification unit 85 makes an announcement based on the information acquired by the queueing-condition acquiring unit 86. Specifically, the server control unit 45 judges the number of customers standing in line at each settlement apparatus 50, based on the information from the queueing-condition acquiring unit 86, and gives an operation command for causing the notification unit 85 to announce to the customer that a certain settlement apparatus 50 for which the number of waiting customers is smaller should be used. Thus, it is possible to notify the customer of a possibly low-latency settlement apparatus 50.

As the notification unit 85, there may be used various types of notification unit which displays, prints or sounds a settlement apparatus 50 that should be used and/or another settlement apparatus 50 that should not be used. When this embodiment is applied to the first and fifth embodiments, the medium issuance apparatuses 10, 10b may function as the notification unit 85, and a settlement apparatus 50 that should be used and/or another settlement apparatus 50 that should not be used may be printed on the medium 90 issued from the medium issuance apparatus 10.

Hereabove, there is described the example in which the queueing-condition acquiring unit 86 is used. However, when such a queueing-condition acquiring unit 86 is not used, the server memory unit 45 may store a settlement apparatus 50 the use which is recommended by the notification unit 85, and the server control unit 45 may cause the notification unit 85 to announce which settlement apparatus 50 should be used in ordder that the number of customers waiting for each settlement apparatus 50 is made uniform, based on the information from the server memory unit 45.

At last, the description of the above respective embodiments and the disclosure of the drawings are only exemplary for explaining the present invention defined in the attached claims. The scope of claim of the present invention is not limited by the description of the above respective embodiments and the disclosure of the drawings.

## Claims

1. A ticket vending system comprising:
a plurality of reception terminal apparatuses configured to be operated by a staff of a ticket distributor, and configured to receive a purchase request of a ticket;
at least one settlement apparatus located on a position different from those of the reception terminal apparatuses, to which a customer makes a payment for the ticket which purchase request has been received by the reception terminal apparatus;
a ticket issuance apparatus configured to issue the ticket which payment has been completed at the settlement apparatus; and
a transaction identification unit configured to identify information related to a transaction which purchase request has been received by the reception terminal apparatus, and configured to enable the settlement apparatus to perform a settlement process.

2. The ticket vending system according to claim 1,
wherein the transaction identification unit includes:
a medium issuance apparatus disposed on each reception terminal apparatus, configured to issue a medium in which specific information associated with the transaction is recorded;
a management apparatus communicatively connected to the reception terminal apparatuses and the settlement apparatus, configured to store the specific information associated with the transaction; and
a medium reading apparatus disposed on the settlement apparatus, configured to read the specific information recorded in the medium; and
wherein the transaction identification unit identifies the transaction associated with the specific information, from the specific information read out by the medium reading apparatus.

3. The ticket vending system according to claim 1,
wherein the transaction identification unit includes:
a first biometric-information acquiring apparatus configured to acquire biometric information of a customer who makes a purchase request to the reception terminal apparatus; and
a second biometric-information acquiring apparatus configured to acquire biometric information of a customer who makes a payment to the settlement apparatus; and
wherein the transaction identification unit compares the biometric information acquired by the second biometric-information acquiring apparatus with the biometric information acquired by the first biometric-information acquiring apparatus, so as to identify the transaction.

4. The ticket vending system according to claim 3, further comprising a management apparatus communicatively connected to the reception terminal apparatuses and the settlement apparatus, configured to store the biometric information acquired by the first biometric-information acquiring apparatus in association with the transaction,
wherein the transaction identification unit reads out the biometric information acquired by the first biometric-information acquiring apparatus conforming to the biometric information acquired by the second biometric-information acquiring apparatus, so as to identify the transaction associated with the biometric information.

5. The ticket vending system according to claim 1,
wherein the transaction identification unit includes:
a first article-information accruing apparatus configured to acquire intrinsic information of an article possessed by a customer who makes a purchase request to the reception terminal apparatus; and
a second article-information acquiring apparatus configured to acquire intrinsic information of an article possessed by a customer who makes a payment to the settlement apparatus; and
wherein the transaction identification unit compares the intrinsic information of the article acquired by the second article-information acquiring apparatus with the intrinsic information of the article acquired by the first article-information acquiring apparatus, so as to identify the transaction.

6. The ticket vending system according to claim 5, further comprising a management apparatus communicatively connected to the reception terminal apparatuses and the settlement apparatus, and configured to store the intrinsic information of the article acquired by the first article-information acquiring apparatus in association with the transaction,
wherein the transaction identification unit reads out the intrinsic information of the article acquired by the first article-information acquiring apparatus, the intrinsic information of the article conforming to the intrinsic information of the article acquired by the second article-information acquiring apparatus, so as to identify the transaction associated with the intrinsic information of the article.

7. The ticket vending system according to claim 1, wherein
the ticket issuance apparatus is located adjacently to the settlement apparatus or integrally with the settlement apparatus.

8. The ticket vending system according to claim 1, wherein
the settlement apparatus has a collective settlement function to collectively settle up a total amount of payments of a plurality of transactions.

9. The ticket vending system according to claim 1, wherein
when there are a plurality of tickets of the same price, the settlement apparatus is capable of designating a settlement splitting mode, and
when the settlement splitting mode is designated, the tickets of the same price are separately settled.

10. The ticket vending system according to claim 1, wherein
a plurality of the settlement apparatuses are provided, and
the ticket vending system further comprises an notification unit configured to notify the customer of a settlement apparatus that should be used and/or another settlement apparatus that should not be used, based on information of an amount of cash in each settlement apparatus or a status of each settlement apparatus.

11. The ticket vending system according to claim 1, wherein a plurality of the settlement apparatuses are provided, the ticket vending system further comprising:
a queueing-condition acquiring unit configured to acquire information related to a queueing-condition of each settlement apparatus; and
an notification unit configured to notify the customer of a settlement apparatus that should be used and/or another settlement apparatus that should not be used, based on the information acquired by the queueing-condition acquiring unit.

12. The ticket vending system according to claim 1, further comprising an automatic reception apparatus configured to issue to the customer a medium in which a reception number is recorded,
wherein each of the reception terminal apparatuses has a reception display unit configured to display the reception number,
wherein the transaction identification unit includes:
a management apparatus communicatively connected to the reception terminal apparatuses and the settlement apparatus, configured to store the reception number in association with the transaction; and
a medium reading apparatus disposed on the settlement apparatus, configured to read the reception number recorded in the medium; and
wherein the transaction identification unit identifies the transaction associated with the reception number, from the reception number read by the medium reading apparatus.

13. The ticket vending system according to claim 1,
wherein the transaction identification unit includes:
a medium issuance apparatus disposed on each reception terminal apparatus, configured to issue a medium in which contents of the transaction are recorded; and
a medium reading apparatus disposed on the settlement apparatus, configured to read the contents of the transaction recorded in the medium; and
wherein the transaction identification unit performs a settlement process using the settlement apparatus, based on the contents of the transaction read by the medium reading apparatus.

14. A ticket vending method comprising:
receiving a purchase request of a ticket by a staff of a ticket distributor who operates one of a plurality of reception terminal apparatuses;
identifying, by a transaction identification unit, information related to a transaction which purchase request having been received by the reception terminal apparatus;
making a payment for the ticket which purchase request has been received by the reception terminal apparatus, by a customer who operates a settlement apparatus located on a position different from that of the reception terminal apparatus, with the use of the information related to the transaction identified by the transaction identification unit; and
issuing, by a ticket issuance apparatus, the ticket which payment has been completed at the settlement apparatus.
